Europäisches Patentamt

European Patent Office

Office européen des brevets

(11) Publication number: **0 647 471 A1**

# EUROPEAN PATENT APPLICATION

(21) Application number: 93307901.4

(22) Date of filing: 05.10.93

(51) Int. Cl.⁶: **B01J 23/94**, C10G 45/04

(43) Date of publication of application:
12.04.95 Bulletin 95/15

(84) Designated Contracting States:
DE FR GB NL

(71) Applicant: **TEXACO DEVELOPMENT CORPORATION**
**2000 Westchester Avenue**
**White Plains,**
**New York 10650 (US)**

(72) Inventor: **Sherwood, David Edward, Jr.**
**1010 Twentieth Street**
**Beaumont,**
**Texas 77706 (US)**
Inventor: **Hardee, Johnnie Ray, Jr.**
**Rt. 1 Box 791**
**Arkadelphia,**
**Arkansas 71923 (US)**

(74) Representative: **Brock, Peter William**
**UROUHART-DYKES & LORD**
**91 Wimpole Street**
**London W1M 8AH (GB)**

(54) Method for the reactivation of spent alumina-supported hydrotreating catalysts.

(57) Spent alumina-supported catalyst used in treating metal contaminated hydrocarbon feedstocks, and comprising an alumina support containing one or more of cobalt, molybdenum, tungsten, nickel, phosphorus and vanadium, can be reactivated, after stripping process oil from the spent catalyst, by contact with steam at an elevated temperature.

The reactivated catalyst can be regenerated by burning off carbon deposits using an oxygen-containing gas optionally after removal of metal contaminants by means of aqueous sulphuric acid containing ammonium ions.

The reactivation technique can be used in hydrosulphurization processes and in the production of low-sulphur product streams from petroleum residua having a sulphur content above 2 weight percent.

EP 0 647 471 A1

This invention relates to a method for reactivation of spent inactive alumina-supported catalysts from a catalytic hydrotreating process. More particularly, this invention relates to method in which spent catalyst withdrawn from a hydrotreating process, such as an H-Oil® hydrogenation process using ebullated-bed reactors, is first stripped of process oil by, for example, washing with a hydrocarbon solvent, and the oil-free catalyst is then contacted with steam at an elevated temperature for a period of 2 to 5 hours, thereby providing a reactivated catalyst. In another aspect of this invention the reactivated catalyst is additionally regenerated by burnoff of the carbon and sulphur deposits under controlled conditions in the presence of an oxygen-containing gas, optionally after rejuvenation of the reactivated catalyst to remove a part or substantially all of the metallic deposits.

During catalytic reaction processes, as exemplified by hydrotreating processes employing ebullated-bed reactors, the catalysts are gradually deactivated because of an accumulation of carbonaceous deposits on the catalyst particles, and by deposition of various metallic elements, such as vanadium or nickel.

There is a need in the art for a practical method for conveniently reactivating spent hydrotreating catalyst withdrawn from a fluidized-bed catalytic reactor system, such as a processing system utilizing ebullated-bed or continuous stirred tank reactors, in hydroprocessing high sulphur and metals-containing hydrocarbon feedstocks.

CA-A-1 159 402 discloses a process for the recovery of used, contaminated catalyst according to particle density differences by fluidization in light liquid hydrocarbon fractions boiling at 93 to 232°C (200 to 450°F), such as light naphtha, kerosene, fuel oil or water. This process is suitable for treating used catalyst derived from fluidized - or ebullated-bed reactors, such as those used in H-Oil® processes which involve continuous or periodic withdrawal of portions of used catalyst and their replacement with fresh catalyst, thereby producing low-density and high-density fractions of used catalyst. The low-density fraction of the used catalyst may be regenerated by carbon burnoff, after removal from the light hydrocarbon fluidization unit and before being returned to the reactor. The high-density fraction of used catalyst is optionally processed for recovery of deposited metals.

US-A-3 809 644 discloses a process for multiple stage hydrodesulphurization of high sulphur, metals-containing petroleum residuum stocks in a multiple stage ebullated-bed hydrogenation process, where catalyst used in the final stage reaction zone is removed and, without any additional treatment such as carbon burnoff is introduced to the preceding reaction zone, thus extending the activity and effective life of the catalyst. In this process all fresh make-up hydrogen for the process is injected into the final reaction zone, so that the hydrogen sulphide in the gas leaving that reaction zone is maintained below 3 mole percent, thus substantially improving the desulphurization reaction rate in that reactor. The partially deactivated catalyst backstaged from the final stage reactor provides guard-type contact solids for metals removal in the preceding stage reactor or reactors. Metals removal from the residual feedstocks can be maintained at the desired level without using high reaction temperatures. This process is reported to be especially effective when three reaction zones connected in series are employed, and is applicable for producing low sulphur fuel oil from feedstocks containing 2 to 5 weight percent of sulphur, and having metals content from 20 to 600 wppm (weight parts per million) of vanadium.

US-A-4 621 069 discloses a process for effective regeneration of used catalyst to remove deposited carbon and sulphur compounds by staged controlled burnoff.
In this process, there is staged burnoff in multiple zones wherein the used particulate catalyst is introduced into a first zone where the catalyst is contacted at 149 to 260°C (300 to 500°F) with an inert gas for 1 - 2 hours to evaporated liquid components; the resulting oil-free catalyst is then passed to a second zone wherein a thin bed of the catalyst is contacted at 416 to 427°C (780 to 800°F) with a gas containing 0.5 to 1.0 V % oxygen in an inert gas for 4 - 6 hours, the partially regenerated catalyst is passed to a third zone, where a thin bed of the catalyst is contacted with a gas containing 1 - 2 V % in an inert gas at 427 to 454°C (800 to 850°F) for 4 - 6 hours time, and finally the further regenerated catalyst is passed to a fourth zone, where it is contacted at 427 to 454°C (800 to 850°F) with a gas containing 2 - 6 V % oxygen in an inert gas for 6 - 10 hours to complete burnoff of carbon and sulphur deposits.

US-A-4 720 473 discloses a process for treating a spent hydrotreating catalyst having an L/D ratio greater than one by (1) stripping volatizable hydrocarbons to form free-flowing catalyst particles, (2) passing the free-flowing catalyst particles to a rotating drum length grading unit having indentations in the cylindrical wall where the catalyst particles with a length less than $L_l$ are separated from the desired catalyst particles having a length greater than $L_l$, the latter fraction comprising lightly contaminated particles and more heavily contaminated catalyst particles (Product A), (3) passing the Product A to a density grading unit utilizing gas suspension, wherein the lightly metals-contaminated catalyst particles are separated from Product A by contacting the suspended particles with an upwardly-sloping, vibrating surface. In a final step, the lightly metals-contaminated catalyst particles having a length greater than $L_l$ are passed to a regeneration zone in which carbonaceous deposits are removed in a controlled burnoff in the presence of an oxygen-containing inert gas at a temperature of 200 to 700°C. Alternatively, the lightly contaminated catalyst particles from the density grading zone can be passed to a rejuvenation zone, where the catalyst particles are acid-leached to remove undesired metals before they are passed to a regeneration zone.

US-A-4 454 240 discloses a catalyst regeneration process which includes a metal contaminants removal step. This procedure is particularly useful for recovering used catalyst from catalyst bed reaction systems such as H-Oil® and H-Coal® hydrogenation processes using ebullated-bed reactors, from fixed-bed catalytic reaction systems, and also from fluid catalytic cracking (FCC) processes. Preferred feedstocks for the reactor processes are derived from petroleum and coal. Catalyst which has been regenerated by this process is said to have activity essentially equal to that of fresh catalyst. The catalyst is first washed with a hydrocarbon solvent, such as naphtha, toluene, or mixtures thereof, to remove process oils, and the oil-free catalyst is then contacted for at least 5 minutes with an aqueous solution of sulphuric acid containing ammonium ions at 16 to 121°C (60 to 250°F), which converts the metal contaminants into the respective soluble sulphate compounds. The metal-laden solution is drained off, after which the treated catalyst is washed with water to remove the residual aqueous solution and, in a final step, the washed, treated catalyst is subjected to a carbon burnoff in which the catalyst is contacted with 1 - 6 V % oxygen in an inert gas.

US-A- 4 795 726 discloses a process for regenerating a spent alumina-based catalyst used in treating metal contaminated hydrocarbon feedstocks consisting essentially of an alumina support and containing one or more metals with hydrogenating activity, in which the catalyst after being conventionally de-oiled with toluene/pentane is contacted with steam at 199 to 499°C (390 to 930°F) and then regenerated by carbon burnoff in the presence of an oxygen-containing gas. In a final step, the regenerated catalyst is rejuvenated by treatment with a basic medium comprising a buffered aqueous solution of an ammonia or ammonium salt of a weak acid having a PH of 9-12 at a temperature of 5 to 100°C.

US-A-4 515 899 discloses a process for extending the useful life of a vanadium-phosphorus-oxygen catalyst used in the production of maleic anhydride on fixed-bed reactors in which the catalyst is regenerated by firstly contacting it with a phosphorus compound, and with a flow of steam at a temperature of 302 to 599°C (575 to 1110°F)

GB-A-1 526 927 discloses a process for the recovery of vanadium from a catalyst which has become inactivated in a process where a vanadium-containing hydrocarbon oil has been treated with hydrogen at elevated temperature and pressure. In this process, the deactivated catalyst is treated with steam at a temperature above 199°C (390°F) and in particular above 249°C (480°F) to remove at least a part of the sulphur and/or coke present on the deactivated catalyst, and then treated with an oxygen-containing gas before acid extraction for the recovery of vanadium.

According to one embodiment, this invention provides a method for reactivating a spent alumina-supported hydrodesulphurization catalyst used in treating metal contaminated hydrocarbon feedstocks, and comprising an alumina support containing one or more of cobalt, molybdenum, tungsten, nickel, phosphorus and vanadium, which comprises stripping process oil from the spent catalyst, and reactivating the spent catalyst by contact with steam at an elevated temperature.

In a preferred embodiment the recovered reactivated catalyst is regenerated by contact with an oxygen-containing gas at a temperature of 371 to 482°C (700 to 90°F) to remove carbon deposits.

Optionally, before regeneration, the reactivated catalyst is treated at a temperature of 16 to 121°C (60 to 250°F) for at least five minutes with an aqueous solution of sulphuric acid containing ammonium ions whereby to convert the metal contaminants into their respective sulphate compounds, the said metal contaminants are removed from the catalyst, and the treated catalyst is then washed to remove the aqueous solution.

Another embodiment of this invention provides hydrodesulphurization process which comprises passing a metals-contaminated hydrocarbon residuum feedstock having a metals content of 50 to 500 wppm and a sulphur content in excess of 2.0 weight percent through multiple reaction zones in an upflow manner under hydrogenation conditions of temperature and pressure in the presence of an alumina-supported catalyst containing one or more metals with hydrogenating activity which is ebullated in the liquid environment, adding fresh particulate high activity catalyst to the final reaction zone, withdrawing spent catalyst from the final reaction zone, reactivating the said spent catalyst, by the method defined above, backstaging the recovered reactivated alumina-supported catalyst to said reaction zones in reverse flow relative to the residuum, and introducing make-up hydrogen directly to the final reaction zone.

Another embodiment of the invention provides a hydroconversion process for the production of low-boiling range, low-sulphur product streams from a petroleum residuum feedstock having a metals content more than 50 p.p.m and a sulphur content in excess of 2.0 weight percent where the residuum is passed upwardly through each of two reaction zones in succession, in the presence of hydrogen and under hydrogenation/hydroconversion conditions of temperature and pressure, both of the said zones containing a particulate alumina-supported catalyst which is placed in ebullation in the liquid products, which comprises: introducing a fresh, particulate, high activity alumina-supported hydrotreating catalyst containing one or more metals into the final reaction zone, said spent catalyst being partially deactivated by metals deposited thereon in the final reaction zone, reactivating the spent catalyst by the method defined above, and withdrawing from the final reaction zone a liquid hydrocarbon stream which can be fractionated to recover the unconverted residuum stream with boiling range of at least 538°C (1000°F) and a sulphur content of 2.3 weight percent which is suitable for blending to a low sulphur fuel oil product.

This invention provides a method for reactivating spent or inactive alumina-supported catalysts having carbonaceous and variable metals contaminant contents so that reactivated catalyst material having a relatively high activity is suitable for further use in a petroleum residua hydroconversion process, such as H-Oil® hydrogenation process, using ebullated-bed or continuous stirred tank reactors.

The method of this invention is useful for treating spent catalyst withdrawn from a wide range of hydrotreating reactors, including hydrodesulphurization units, and this catalyst reactivation method is particularly useful for treating spent catalyst withdrawn from, for example, an ebullated-bed single stage hydrodesulphurization unit, or from any of the stages of a multiple stage hydrodesulphurization ebullated-bed unit where catalysts comprising an oxide of nickel or cobalt and an oxide of tungsten or molybdenum, supported on porous alumina, for example are employed.

Although a wide variety of spent or used hydro-treating catalysts can be reactivated by the method of this invention, it is especially useful for treating spent hydrotreating catalysts having a regular geometric shape formed by extrusion or pelletizing, and preferably which have a generally cylindrical shape, with a generally circular cross-section and having a cross-section diameter of 0.76 to 1.65 mm (0.030 to 0.065 inches).

Catalyst particles which can be reactivated by the method of this invention comprise any of the conventionally shaped alumina-supported or silica-supported catalysts, which usually contain active metals such as cobalt, molybdenum, nickel, phosphorus, tungsten, vanadium or titanium, used in hydroconversion or hydrorefining of hydrocarbons, and particularly with regard to hydrotreating or hydrodesulphurization of the residuum feedstocks.

(A) Removal of Process Oils to Form Free-Flowing Catalyst Particles

In the reactivation method of this invention spent hydrodesulphurization catalyst which has been removed from an ebullated-bed reactor, such as an H-Oil® reactor operating under hydrodesulphurization conditions, is sent to a catalyst-stripping unit for deoiling. In this unit the spent catalyst particles are, for example, washed batchwise or in a continuous manner with a hydrocarbon solvent liquid to remove process oils. A variety of washing methods may be utilized, such as (a) adding the used catalyst with mixing to a tank containing the solvent liquid, or (b) introducing the spent catalyst into a catalyst washing unit where solvent is circulated uniformly upwardly through a generally vertical column by means of a pump and a flow distributor. In both washing methods, the hydrocarbon can be, for example, naphtha or toluene, and mixtures thereof. The hydrocarbon solvent is heated to maintain the solvent temperature at 93 to 149°C (200 to 300°F) in both methods (a) and (b). After the washing free-flowing catalyst particles are obtained by drying at a low temperature e.g 121°C (250°F) in air or in air diluted with an inert gas such as nitrogen, or at even lower temperatures (e.g ambient) under vacuum conditions.

Alternatively, the catalyst can be deoiled by stripping at high temperature, e.g 260°C (500°F) in a flowing inert gas, such as nitrogen, until no additional process oil is removed.

(B) Steam Treatment of Spent Free-Flowing Catalyst Particles

The dry, deoiled free-flowing catalyst particles are next sent to a steam treatment unit, in which the catalyst particles are contacted with steam at a temperature from 538 to 677°C (1000 to 1250°F), preferably at 621 to 677°C (1150 to 1250°F). The contact time may be from 2 to 5 hours, preferably 2.5 to 3.5 hours. It has been found that a surprising increase in the hydro-desulphurization activity of the alumina-supported catalyst results when the steam treatment of the deoiled used catalyst is conducted at the elevated temperatures set out above. If desired, the steam may be diluted with up to 50 percent of nitrogen. If the steam-treated catalyst particles are subsequently regenerated by treatment with an oxygen-containing gas at elevated temperatures, the regeneration process is easier to control and requires much less time. In an initial heating step, the used catalyst particles may be preheated to the desired elevated temperatures by contact with an inert gas, such as nitrogen, before the steam treatment step.

4

EXAMPLES 1-5

In these examples samples of about 100 cm$^3$ of used catalyst particles withdrawn from an ebullated-bed reactor processing residual crudes having a boiling range such that at least 89 volume percent boils at temperatures of at least 538°C (1000°F), and sulphur contents in excess of 2 weight percent, operating under hydro-desulphurization conditions, were placed as a fixed bed in a steaming unit. The catalyst treated in these examples was Criterion® HDS-1443B, a nickel-molybdenum catalyst, on an alumina support. Each used catalyst sample was, before being placed in the steaming unit, washed with toluene at a temperature of about 110°C (230°F), and afterwards dried in air at a temperature of about 121°C (250°F), and the hydrodesulphurization activity of the deoiled catalyst was determined by the hydrodesulphurization micro-activity test (HDS-MAT test). After the deoiled, used catalyst had been loaded into the steaming unit, which was surrounded by a temperature controlled furnace, the fixed catalyst bed thus formed was heated to the desired steaming temperature with flowing nitrogen. Water at a rate of 50 cm$^3$ per hour was introduced into a steam generator, and steam leaving this unit was sent in a downflow manner through the catalyst bed in the steaming unit. The first water effluent (i.e., the condensate) leaving the steaming unit was extremely black in colour, and as the steaming period was continued the water effluent was less coloured, and finally at the end of the three hour steaming period, the effluent was completely clear and colourless. At the conclusion of the steaming period, heating was stopped, the catalyst sample was allowed to cool under flowing nitrogen, and finally the hydrodesulphurization activity of the steamed catalyst was determined by the HDS-MAT test.

The V/Mo atomic ratio of the deoiled catalysts, the hydrodesulphurization activity of the deoiled catalysts and the hydrodesulphurization activity of the deoiled catalysts after steaming at 538°C (1000°F) for three hours (HDS-MAT tests) for Examples 1-5 are reported in Table 1 which follows:

TABLE 1

| Example Number | 1 | 2 | 3 | 4 | 5 |
|---|---|---|---|---|---|
| Reactor | A | B | C | B | D |
| X Age,bbl/ lb | 3.44 | 3.46 | 1.14 | 4.81 | 7.0 |
| (l/kg) | 180.6 | 181.6 | 59.8 | 252.5 | 367.5 |
| Feed | E then F | E then F | G | E then F | E then F |
| Catalyst Type | Criterion® HDS-1443B | Criterion® HDS-1443B | Criterion® HDS-1443B | Criterion® HDS-1443B | Criterion® HDS-1443B |
| V/Mo Atomic Radio | 0.36 | 1.45 | 2.14 | 2.51 | 3.29 |
| % HDS Toluene washed | 7.8 | --- | 4.4 | 5.7 | 4.5 |

Table 1 cont...

% HDS
Toluene
washed
then
steamed
at 538°C
(1000°F)    11.6              ---              6.5              6.4              6.5

A – second-stage reactor of a two-stage ebullated-bed H-Oil®
    unit operated with daily catalyst replacement.

B – first-stage reactor of a two-stage ebullated-bed H-Oil®
    unit operated with daily catalyst replacement.

C – single-stage reactor ebullated-bed H-Oil® unit operated
    without daily catalyst replacement.

D – single-stage reactor ebullated-bed H-Oil® unit operated without
    daily catalyst replacement.

E – vacuum resid from Alaskan North Slope Crude: 538°C+ (1000°F+)
    vol. % 89.2; Sulphur 2.30; vanadium = 82 wppm.

F – Vacuum resid 538°C+ (1000°F+) vol. 89.09; sulphur 3.9 wt %;
    vanadium – 102 wppm.

G – Vacuum residuum from Isthmus Crude 538°C+ (1000°F+) vol. %95.1;
    sulphur 4.03 wt. %; vanadium – 321 wppm.

X – Age = volume of air treated per unit weight of catalyst.

Samples of the deoiled catalyst of Example 2 were each contacted with steam for three hours at 593°C (1100°F), 649°C (1200°F) and 704°C (1300°F) respectively, and the H/C atomic ratio for the toluene washed catalyst, for the three steamed samples as well as the hydrodesulphurization activity (HDS-MAT test) for the three thus-treated catalyst samples were determined. The results are reported in Table 2 which follows:

TABLE 2

| Treatment | % HDS | H/C atomic ratio |
|---|---|---|
| Toluene washed | --- | 0.96 |
| Steamed 3 hours at 593°C (1100°F) | 7.90 | 0.30 |
| steamed 3 hours at 649°C (1200°F) | 11.2 | 0.44 |
| 704°C (1300°F) | 10.5 | 0.57 |

The data of Table 2 show the surprising increase in hydrodesulphurization activity (% HDS) achieved at elevated steaming temperatures, and especially the % HDS resulting after the 704°C (1200°F) treatment. Additionally, the low H/C atomic ratios on each steamed sample indicate that entrapped oil was successfully being removed leaving only a graphite-like substance in the catalyst pores.

In the HDS-MAT procedure, a 0.5g of ground, calcined catalyst is presulphided with $10\% H_2S/H_2$ flowing at 50 cm$^3$/minute for one hour at 399°C (750°F). The catalyst is then exposed to a model feed and hydrogen for approximately four hours. Cuts are taken periodically, and analyzed by gas chromatography for the conversion of benzothiophene into ethylbenzene. The average hydrodesulphurization activity is reported as C 0.5 g.

The HDS-MAT run conditions are as follows:

| | |
|---|---|
| Temperature | 288°C (550°F) |
| Pressure | Atmospheric |
| Chargestock | 0.857 molar benzothiophene in ASTM reagent grade heptane (3.68 wt% S) |
| Space Velocity | 4 h.$^{-1}$ |
| Catalyst Charge | 0.5 grams |
| Hydrogen Flow | 50 cm$^3$/min. of ultra-high purity $H_2$ |

The calculation is performed as follows:

```
HDS-MAT C 0.5 g @ 288°C (550°F)- Average HDS - (100 x (1.0 -
Sulphur in product))
Sulphur in feed
```

### (C) Catalyst Regeneration

Optionally, the catalyst fraction recovered from the steam treating zone is passed to a regeneration zone for removal of carbonaceous deposits. The regeneration zone may be a conventional regenerator in which a gas containing 1 - 6 V % oxygen (e.g., air diluted with an inert gas such as nitrogen), or air, is supplied to the regenerator under combustion conditions to oxidize the carbonaceous deposits to carbon dioxide, which is withdrawn from the regenerator. Suitable oxidation temperatures are 371 to 482°C (700 to 900°F).

The reactivated catalyst fraction recovered from the regeneration zone may, if desired, be passed to a separate density grading zone. This step may be desirable since some catalyst particles are more contaminated with nickel and vanadium than other particles. A number of processes suitable for density grading of used or spent catalyst particles have been described in the art. For example, density grading of spent or used catalyst particles using an upward flow of gas, such as air, through an inclined vibrating surface to produce a light catalyst fraction which contains little or no heavy metal contamination, is described in the above mentioned US-A-4 720 473 and CA-A-1 159 402.

### (D) Acid Leaching of Catalyst Particles

In a final optional step, the reactivated catalyst particles, after steam treatment and before regeneration, can be sent to a rejuvenation unit to remove metallic deposits. The catalyst particles are preferably first washed with water to fill the catalyst pores. Next the catalyst particles are passed to an acid -treating column, and a solution of 5 - 50 weight percent sulphuric acid and 0 - 10 weight percent ammonium ions is introduced into the lower section of the column, which is made of corrosion resistant material. The acid solution is recovered from the top of the column and generally is recycled by means of a pump to the bottom of the column, together with additional make-up acid as required. Usually the acid treatment is conducted at temperatures from 16 to 121°C (60 to 250°F). In a final step, after the acid treatment, the catalyst particles are passed to a washing unit where they are washed with water to remove the acid, following which the recovered, washed catalyst particles are preferably dried in air, or in air diluted with nitrogen, at a temperature of 66 to 121°C (150 to 250°F). The process for removing metallic deposits from the catalyst particles is more completely described in US-A-4 454 240.

As previously pointed out, the alumina-based catalysts usually employed in ebullated-bed reactors operating under hydrodesulphurization conditions contain one or more metals with hydrogenating activity, such as cobalt, molybdenum, nickel, phosphorus, tungsten, vanadium and titanium, and the reactivation process together with the regeneration and rejuvenation may result in removal of a part of the metals with hydrogenation activity from the catalysts. If needed, additional amounts of the required metals can be supplied to the reactivated catalyst particles by methods well known in the art.

Condensed steam/hydrocarbon/tar mixtures recovered from the steam treating zone may be separated using conventional means, such as simply flashing off the water. The recovered water may then be recycled for steam generation, for example, for use in the process of the invention. The hydrocarbon/tar mixture can be disposed of in a hydrogen generation unit producing hydrogen for use in a hydrotreating unit.

**Claims**

1. A method for reactivating a spent alumina-supported hydrodesulphurization catalyst used in treating metal contaminated hydrocarbon feedstocks, and comprising an alumina support containing one or more of cobalt, molybdenum, tungsten, nickel, phosphorus and vanadium, which comprises stripping process oil from the spent catalyst, characterised in that the spent catalyst is reactivated by contact with steam at an elevated temperature.

2. A method according to Claim 1 characterised in that the spent catalyst is stripped of process oil by washing with a hydrocarbon solvent selected from toluene, naphtha and mixtures thereof at a temperature of 93 to 149°C (200 to 300°F).

3. A method according to Claim 1 or 2 characterised in that the temperature of the steam is 538 to 677°C (1000 to 1250°F).

4. A method according to any one of Claims 1 to 3 characterised in that the spent catalyst is contacted with steam for 2 to 5 hours.

5. A method according to any one of Claims 1 to 4 characterised in that the recovered reactivated catalyst is regenerated by contacting the said reactivated catalyst with an oxygen-containing gas at a temperature of 371 to 482°C (700 to 900°F) to remove carbon deposits.

6. A method according to Claim 5 characterised in that, before regeneration, the reactivated catalyst is treated at a temperature of 16 to 121°C (60 to 250°F) for at least 5 minutes with an aqueous solution of sulphuric acid containing ammonium ions whereby to convert the metal contaminants into their respective sulphate compounds, the said metal contaminants are removed from the catalyst, and the treated catalyst is then washed to remove the aqueous solution.

7. A hydrodesulphurization process which comprises passing a metals-contaminated hydrocarbon residuum feedstock having a metals content of 50 to 500 wppm and a sulphur content in excess of 2.0 weight percent through multiple reaction zones in an upflow manner under hydrogenation conditions of temperature and pressure in the presence of an alumina-supported catalyst containing one or more metals with hydrogenating activity which is ebullated in the liquid environment, adding fresh particulate high activity catalyst to the final reaction zone, withdrawing spent catalyst from the final reaction zone, reactivating the said spent catalyst, backstaging the recovered reactivated alumina-supported catalyst to said reaction zones in reverse flow relative to the residuum, and introducing make-up hydrogen directly to the final reaction zone, characterised in that the spent catalyst is reactivated by a method according to any one of Claims 1 to 6.

8. A hydroconversion process for the production of low-boiling range, low-sulphur product streams from a petroleum residuum feedstock having a metals content more than 50 p.p.m and a sulphur content in excess of 2.0 weight percent where the residuum is passed upwardly through each of two reaction zones in succession, in the presence of hydrogen and under hydrogenation/hydroconversion conditions of temperature and pressure, both of the said zones containing a particulate alumina-supported catalyst which is placed in ebullation in the liquid products, which comprises:
   introducing a fresh, particulate, high activity alumina-supported hydrotreating catalyst containing one or more metals into the final reaction zone, withdrawing spent catalyst from the final reaction zone, said spent catalyst being partially deactivated by metals deposited thereon in the final reaction zone, reactivating the spent catalyst, and withdrawing from the final reaction zone a liquid hydrocarbon stream which can be fractionated to recover the unconverted residuum stream with boiling range of at least 538°C (1000°F) and a sulphur content of 2.3 weight percent which is suitable for blending to a low sulphur fuel oil product,
characterised in that the spent catalyst is reactivated by a method according to any of Claims 1 to 6.

## DOCUMENTS CONSIDERED TO BE RELEVANT

| Category | Citation of document with indication, where appropriate, of relevant passages | Relevant to claim | CLASSIFICATION OF THE APPLICATION (Int.CL6) |
|---|---|---|---|
| E | US-A-5 254 513 (TEXACO) 19 October 1993<br>* claims 1,4,8,10,11 *<br>* column 1, line 35 - line 41 *<br>* column 4, line 30 - line 59 *<br>--- | 1-8 | B01J23/94<br>C10G45/04 |
| A | DE-A-20 29 370 (TEXACO)<br>* claims 1,6-8 *<br>* page 3, line 10 - page 4, line 17 *<br>* table 1 *<br>* examples 1,3 *<br>--- | 1,5,7 | |
| A | GB-A-2 108 861 (HYDROCARBON RESEARCH)<br>* claims 1,4,5,8 *<br>* example 1 * | 1,2,5-8 | |
| D,A | & US-A-4 454 240 (HYDROCARBON RESEARCH)<br>--- | | |
| A | EP-A-0 244 014 (SHELL)<br>----- | | |

TECHNICAL FIELDS
SEARCHED     (Int.Cl.6)

B01J
C10G

The present search report has been drawn up for all claims

| Place of search | Date of completion of the search | Examiner |
|---|---|---|
| THE HAGUE | 14 February 1994 | De Herdt, O |

CATEGORY OF CITED DOCUMENTS

X : particularly relevant if taken alone
Y : particularly relevant if combined with another
　　document of the same category
A : technological background
O : non-written disclosure
P : intermediate document

T : theory or principle underlying the invention
E : earlier patent document, but published on, or
　　after the filing date
D : document cited in the application
L : document cited for other reasons

& : member of the same patent family, corresponding
　　document

EPO FORM 1503 03.82 (P04C01)